# EUROPEAN PATENT APPLICATION

(11) **EP 0 628 333 A1**
(43) Date of publication of application: **14.12.1994**
(21) Application number: 94201511.6
(22) Date of filing: 27.05.1994
(51) Int. Cl.: B01D 21/00

(54) **Method and apparatus for separating solid particles from liquid with complete recirculation**

(30) Priority: 27.05.1993 NL 9300914
(71) Applicant: Coöperatieve Verkoop- en Productievereniging van Aardappelmeel en Derivaten 'AVEBE' B.V., NL-9641 JA Veendam (NL)
(72) Inventor: de Vries, Johannes, NL-9481 GE Vries (NL)
(74) Representative: Smulders, Theodorus A.H.J., Ir.

(57) **Abstract**

The invention relates to a method for purifying liquid polluted with solids particles, in which the liquid is fed into a settling tank, in such a manner that the solids particles settle, effluent being discharged by effluent discharge means and the sediment being passed into a sludge sump, a sediment suspension being formed in the sludge sump, the method being characterized in that the density of the suspension is measured, sediment being supplied until the measured density of the suspension attains a preset value, whereafter the entire contents of the sludge sump are discharged from the sludge sump at the same time.

## Description

This invention relates to a method for purifying liquid polluted with solids particles, in which method the liquid is fed into a settling tank where the solids particles are allowed to settle, with effluent being discharged and the sediment being passed into a sludge sump where a sediment suspension is formed.

In the purification of liquids polluted with settleable solid particles, such as for instance waste water, it is conventional to supply the waste water to a settling tank where the waste water is stored for some time. The solids particles then sink to the bottom of the settling tank, where a layer of sediment is formed. The relatively clean water, referred to as effluent, is discharged at the top of the settling tank, for instance into open water. For the purpose of the discharge of the sediment, a part of the sediment is periodically or continuously deposited by mechanical means into a sludge sump, arranged under the settling tank. In the sludge sump, the sediment is brought into, and maintained in, suspension, for instance by means of stirrers, a part of the suspension being continuously discharged from the sludge sump.

In the supplied polluted liquid, referred to as influent, the concentration of the settleable solid matter is generally not constant in time and may even be subject to large fluctuations. Thus, the solid particle concentration of waste water from companies and sewerage systems, for instance, will change markedly in case of cleaning activities, pipe fracture, heavy downpours and the like. The prior art method has the disadvantage that, as a result of the large fluctuations in the supply of solid particles in the influent, the density of the suspension discharged from the sludge sump will also be subject to large fluctuations, which requires that the plant for further treating the suspension be adapted to the maximum supply of solid particles because otherwise there is a possibility that the sediment cannot be processed, with the consequence that, for instance, the mechanical means for passing the sediment into the sludge sump may jam, the treatment plant may be overloaded or the settling tank and the sludge sump may clog up.

Because the treatment plant has to be adapted to the maximum density of the suspension the treatment plant will most of the time work at less than its maximum capacity, the consequence being that the apparatus has to be designed to be greater than is necessary most of the time, so that the apparatus is relatively costly and requires relatively much space.

Accordingly, the object of the invention is to provide a method of the type described in the preamble of the main claim, whereby the above disadvantages and problems associated with apparatus for practising the known method are avoided.

To that end, the method according to the invention is characterized in that the density of the suspension is measured, with sediment being supplied until the measured density of the suspension attains a preset value, whereafter the entire contents of the sludge sump are discharged from the sludge sump at the same time.

By measuring the density of the suspension, optimum thickening of the suspension can be effected before the suspension is discharged from the sludge sump. By optimum thickening of the suspension is meant that the solids particle density of the suspension is raised to such an extent that the suspension is still sufficiently liquid for further processing without the solid particles settling in the sludge sump or in the pipes.

By discharging the sludge from the sludge sump in one go when the measured density of the sludge has attained a preset value, the advantage gained is that the amount of solid matter that is supplied to a treatment plant arranged downstream of the sludge sump is always the same, so that the capacity of the treatment plant can be geared thereto. The transport capacity of the purification apparatus has been selected to be such that the product of the displaced volume and the solids content is always amply sufficient for maximum solids through-put. This is to say that in the case where influent with a maximum solids concentration is supplied, suspension is discharged from the sludge sump with a maximum frequency, whilst in the case where influent with a lower solids concentration is supplied, suspension is discharged from the sludge sump with a lower frequency, so that the solids concentration in the suspension being discharged is the same in all cases.

The invention further relates to a purification apparatus which is suitable in particular for the use of a method according to the invention, which apparatus comprises at least a settling tank, a sludge sump, influent supply means and effluent discharge means, means for transferring sediment from the settling tank into the sludge sump, means for bringing the sediment into, and maintaining it in, suspension in the sludge sump, measuring means for measuring the density of the suspension, and a discharge pipe for discharging at least a part of the suspension from the sludge sump.

In known purification apparatuses the suspension is discharged from the sludge sump by pumping the suspension from the sludge sump, for which purpose the discharge pipe comprises a suction pump. Such an apparatus has the disadvantage that sediment may be left behind in the pump and the discharge pipe after the sludge sump has been emptied, so that particularly the pump may be damaged.

In order to avoid these disadvantages the apparatus according to the invention is characterized in that means are provided for discharging by means of water at least a part of the suspension from the sludge sump out of the apparatus, these means comprising a water supply pipe and being controllable by the measuring means.

In the apparatus according to the invention, an amount of water can be supplied through a water supply pipe for the purpose of discharging through displacement at least the last part of the suspension from the sludge sump. As a result thereof, the pump is not unduly loaded during the discharge of the suspension from the sludge sump, and moreover sediment is prevented from settling in the suspension discharge means, so that damage as a result of the settlement of sediment is avoided.

To clarify the invention, exemplary embodiments of the method and the apparatus will be described in the following, with reference to the accompanying drawings.
Fig. 1 is a sectional view of the purification apparatus according to the invention; and
Fig. 2 is a sectional view of an alternative embodiment of the apparatus according to the invention.

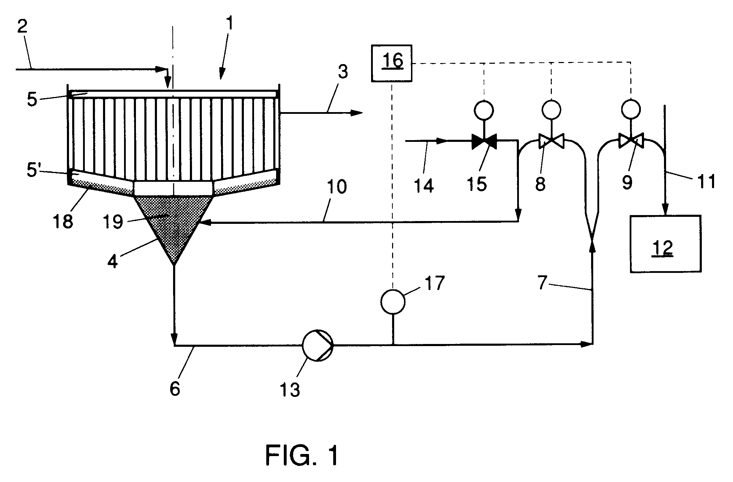

The apparatus according to Fig. 1 comprises a settling tank 1, centrally at the top of which terminates an influent pipe 2 and at the top which, near the longitudinal edge, connects an effluent pipe 3. The settling tank 1 comprises, centrally at the bottom thereof, a downwardly extending funnel-shaped sludge sump 4 which, at the top thereof, is in open communication with the settling tank 1. Arranged above the settling tank 1 is a scraper bridge 5 having connected thereto one or more scrapers 5' moveable along the bottom 1' of the settling tank 1. The underside of the scrapers 5' is spaced some distance from the bottom 1' of the settling tank.

Connected to the lower end of the sludge sump 4 is a discharge pipe, which connects to a vertical standpipe 7. This standpipe 7 connects the discharge pipe 6 with two valves 8 and 9, the first valve 8 being connected with a return pipe 10 connected to the sludge sump, whilst the second valve 9 is connected with a connecting pipe 11 in turn connected to a plant 12 for the further processing of suspension to be discharged from the sludge sump 4.

Included in the discharge pipe 6 of the sludge sump 4 is a pump 13 for passing suspension discharged from the sludge sump 4 through the discharge pipe 6 and through, respectively, the return pipe 10 and the connecting pipe 11. Connected to the return pipe 10 between the first valve 8 and the sludge sump 4 is a water supply pipe 14, the water supply from the pipe 14 being directed in the direction of the sludge sump. Included in the water supply pipe is a third valve 15 which is designed as a controlled valve whose flow rate and open period can be preset.

The apparatus further comprises a control device 16 and a density measuring unit 17, arranged in the discharge pipe 6 of the sludge sump 4, for measuring the density of the suspension being passed through the discharge pipe 6. By means of the control device 16 at least the three valves 8, 9 and 15 and the pump 13 can be controlled on the basis of the density of the suspension flowing through the discharge pipe 6 as measured by the density measuring unit 17.

In the following, the method according to the invention will be outlined with reference to the apparatus shown in Fig. 1.

A flow of liquid polluted with solid particles, referred to as 'influent', is supplied through the influent pipe 2 to the settling tank 1. The solid particles in the influent settle in the settling tank 1 and form a layer of sediment 18 on the bottom 1' thereof, whilst the water that has been stripped of the solid particles, referred to as 'effluent', is discharged through the effluent pipe 3. Because the influent pipe 2 terminates centrally at the top of the settling tank 1, a distribution is obtained in the layer of sediment on the bottom 1' of the settling tank, the mass of the solid particles therein decreasing from the centre towards the periphery.

Using the scrapers 5' which are moved over the sediment 18 by the scraper bridge 5, the sediment 18 is partly passed into the sludge sump 4, where a suspension 19 is formed by the sediment 18. This suspension 19 is withdrawn from the sludge sump 4 through the discharge pipe 6. The density of the suspension 19 is measured continuously by the density measuring unit 17, and on the basis of the measured density the first, second and third valves 8, 9, 15 are controlled as follows.

When the measured density is below a preset maximum value set in the control unit 16, the suspension 19 is returned into the sludge sump 4 through the return pipe 10. The scrapers 5' add additional sediment to the suspension in the sludge sump, so that the measured density of the suspension in the discharge pipe 6 will rise.

When the measured density attains or exceeds the preset maximum value, the suspension 19 is discharged to the treatment plant 12 until the measured density falls below a set minimum value, whereafter the suspension discharged from the sludge sump 4 is returned to the sludge sump 4 again.

For the purpose of discharging the suspension 19 to the treatment plant 12, the control unit 16 closes the first valve 8 and opens the second valve 9, so that pump 13 can pump at least the greater part of the suspension from the sludge sump 4 and conduct it through the discharge pipe 6 and the connecting pipe 11 to the treatment plant 12. Then the control unit 16 opens the third valve 15, so that the last part of the suspension can be flushed at least from the sludge sump 4, the pipe 6, the pump 13, the standpipe 7 and the valve 9. After sufficient flush water has been supplied through the third valve 15, the same is closed before the second valve 9 is closed and the first valve 8 is opened for a new recirculation cycle.

The displacement of the suspension from the sludge sump by means of water has as an advantage that at least the respective pipes, the pump and the measuring unit are flushed by the water after the suspension has passed, so that the apparatus cannot be damaged by solid particles which have been left in the pipes, the pump or the measuring unit and have settled therein out of the suspension. Since the first valve 8 and the second valve 9 are arranged above a standpipe 7, it is impossible for solid particles to settle in the valves because they will sink through the standpipe 7, whereafter the solid particles will be entrained by a next volume of suspension or water. This prevents in a simple manner a situation where solid particles can settle in the first and second valves and can damage the valves.

Because the suspension is not discharged to the treatment plant until the measured density of the suspension exceeds the preset value, it is ensured that every volume that is fed to the treatment plant contains the same amount of solid particles, so that it is possible to gear the capacity of the treatment plant exactly to that amount of solid particles, regardless of large fluctuations in the density of solids in the influent.

The transport capacity of the apparatus has been selected to be such that the product of the displaced volume of suspension (m³/h) and the solids content (kg/m³) in the suspension is always amply sufficient for maximum solids supply (kg/h). The discharge of suspension to the treatment plant 12 will, in the case of a low solids concentration in the influent, exhibit, and certainly so after the lapse of some time, an intermittent pattern, whereby the periods in which no suspension is being discharged to the treatment plant are relatively long because in each case the suspension will be recirculated for some time before it has attained the required density for discharge. Conversely, in the case of a high (maximum) solids concentration in the influent, a highly regular discharge of suspension to the treatment plant will develop, and certainly so after the lapse of some time, the periods in which no suspension is discharged to the treatment plant being relatively short because in each case the suspension will be recirculated only for a very short time at most before it has attained the required density for discharge.

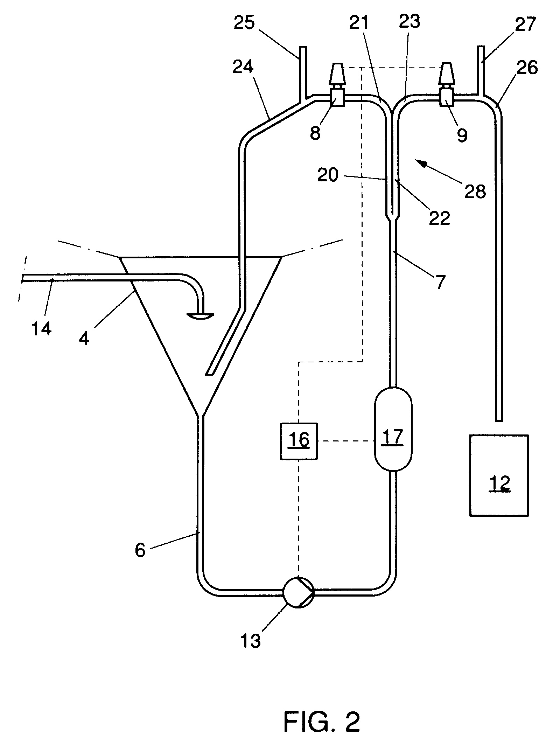

Fig. 2 shows an alternative embodiment of the apparatus according to the invention, where the water supply pipe terminates centrally near the top of the sludge sump, so that suspension can be displaced from the sludge sump effectively and simply, whilst the return pipe terminates near the bottom of the sludge sump. The suspension in the sludge sump will not invariably have a homogeneous distribution. Thus, in some cases the suspension at the top of the sludge sump will have a lower density than the suspension at the bottom of the sludge sump. In such cases it is advantageous when the suspension returned into the sludge sump through the return pipe and having a relatively high density is returned into the lower portion of the sludge sump, where the suspension has a corresponding relatively high density.

In this embodiment the standpipe 7 is constructed as two substantially vertically extending transit conduits having a common lower connection to the discharge pipe 6. The first transit conduit 20, at the end remote from the discharge pipe 6, is connected to a first pipe bend 21 which is disposed in a vertical plane and connects to the first valve 8, whilst the second transit conduit 22, at the end remote from the discharge pipe 6, is connected to a second pipe bend 23 which is disposed in a vertical plane and connects to the second valve 9. Provided on the side of the first valve 8 remote from the first pipe bend 21 is a return pipe connection piece 24, which comprises a siphon interrupter 25. Provided on the side of the second valve 8 remote from the pipe bend 23 is a connecting-pipe connection-piece 26 likewise comprising a siphon interrupter 27. The standpipe 7, together with the first and second valves 8, 9 and the respective connection pieces 24 and 26, are constructed as a unit 28 adapted to be fitted and removed as one whole. This makes it easy for the unit to be replaced in case of failure of, for instance, either of the valves 8, 9, thereby preventing a situation where in the case of such failure the processing of influent has to be interrupted for a relatively long time. The siphon interrupters 25, 27 have as an advantage that they prevent the occurrence of an under-pressure in the pipes during the discharge of the suspension from the sludge sump 4, which might hinder the continuous flow of the suspension.

Within the scope of the invention, various modifications and further embodiments of the method and the apparatus are possible. Thus, for instance, other means than those described can be used for bringing the sediment into suspension and keeping it in suspension, and the water can be supplied in a different manner or at other or several points. Accordingly, the invention is not limited to the examples described.

## Claims

1. A method for purifying liquid polluted with solids particles, in which method the liquid is fed into a settling tank where the solids particles are allowed to settle, with effluent being discharged and the sediment being passed into a sludge sump where a sediment suspension is formed, characterized in that the density of the suspension is measured, with sediment being supplied until the measured density of the suspension attains a preset value, whereafter the entire contents of the sludge sump are discharged from the sludge sump at the same time.

2. A method according to claim 1, characterized in that the sediment is maintained in suspension at least in the sludge sump in that the suspension is withdrawn from the sludge sump and returned directly.

3. A method according to claim 2, characterized in that the suspension is conducted from the sludge sump to a higher level through a standpipe, the suspension being returned from the higher level into the sludge sump through a return pipe until the measured density of the suspension attains the preset value, whereafter the suspension is discharged from the higher level through a discharge pipe.

4. A method according to any one of claims 1-3, characterized in that when the preset density of the suspension in the sludge sump has been attained, at least a part of the suspension is discharged from the sludge sump by displacement by means of flush water.

5. A method according to claim 4, characterized in that, for the purpose of displacement, a predetermined amount of flush water is used.

6. A method according to claim 3 and claim 4 or 5, characterized in that at least a part of the flush water is supplied by way of the return pipe.

7. An apparatus, suitable in particular for the use of a method according to any one of the preceding claims, comprising at least a settling tank, a sludge sump, influent supply means and effluent discharge means, means for transferring sediment from the settling tank into the sludge sump, means for bringing the sediment into suspension and maintaining it in suspension in the sludge sump, measuring means for measuring the density of the suspension, and a discharge pipe for discharging at least a part of the suspension from the sludge sump, characterized in that means are provided for discharging by means of water at least a part of the suspension from the sludge sump out of the apparatus, said means comprising a water supply pipe and being controllable by the measuring means.

8. An apparatus according to claim 7, characterized in that the apparatus comprises a return pipe for returning suspension discharged from the sludge sump through the discharge pipe, there being provided pumping means for pumping the suspension through the discharge pipe and the return pipe, there being provided in the discharge pipe controllable valve means whereby in a first control position the discharge pipe is connected by way of the valve means with the return pipe, in such a manner that the suspension discharged from the sludge sump is recirculated through the discharge pipe and the return pipe, and in a second control position the discharge pipe is connected with a connecting pipe for discharging the suspension from the sludge sump to a treatment plant connected to the apparatus through the connecting pipe.

9. An apparatus according to claim 8, characterized in that the valve means comprise at least two control valves, a first control valve in open position connecting the discharge pipe with the return pipe and a second control valve in open position connecting the discharge pipe with the connecting pipe.

10. An apparatus according to claim 8 or 9, characterized in that the water supply pipe is connected with the return pipe.

11. An apparatus according to any one of claims 7-10, characterized in that a controlled valve is included in the water supply pipe.

12. An apparatus according to claim 11, characterized in that the controlled valve is a time-controlled valve.

13. An apparatus according to any one of claims 7-12, characterized in that the discharge pipe is connected to the lower end of a standpipe which comprises two substantially vertically extending transit conduits provided with a common lower-level inlet and each merging at the top with a pipe bend located in a vertical plane, the first and second control valves being included in the respective pipe bends.

14. An apparatus according to any one of claims 8-13, characterized in that the return pipe comprises a siphon interrupter.

15. An apparatus according to any one of claims 8-14, characterized in that the connecting pipe comprises a siphon interrupter.

16. An apparatus according to any one of claims 8-15, characterized in that the water supply pipe connects to the side of the siphon interrupter remote from the control valve connected to the return pipe, the flow of water fed into the return pipe being directed in the direction of the sludge sump.

17. An apparatus according to any one of claims 8-16, characterized in that the sludge sump is funnel-shaped, the return pipe terminating near the bottom of the sludge sump.
